# EUROPEAN PATENT APPLICATION

(11) **EP 2 562 998 A1**
(43) Date of publication of application: **27.02.2013**
(21) Application number: 10850133.9
(22) Date of filing: 11.11.2010
(51) Int. Cl.: H04M 1/725, G06F 17/30, H04M 1/247

(54) **METHOD FOR DIRECTLY ACCESSING MENU OPTION IN MOBILE COMMUNICATION TERMINAL**

(30) Priority: 23.04.2010 CN 201010157595
(71) Applicant: Huizhou TCL Mobile Communication Co., Ltd, Shenzhen, Guangdong 518067 (CN)
(72) Inventor: WU, Qingguo, Guangdong 518067 (CN)
(74) Representative: Petraz, Gilberto Luigi
(86) International application number: PCT/CN2010/078638
(87) International publication number: WO 2011/131001

(57) **Abstract**

The present invention is applicable for a mobile communication terminal and provides a method for directly accessing a menu item of the mobile communication terminal. The method comprises: a. the mobile communication terminal receiving a menu command inputted by a user via an IDLE interface, and seeking a menu item corresponding to the menu command; and b. the mobile communication terminal activating the menu item. The present invention provides a technical scheme which can make the user directly accessing the menu item at any position of the mobile communication terminal. There is no need to access menu items level by level; thereby simplifying an operation by the user, as well as increasing the humanizing degree of the mobile communication terminal.

## Description

### TECHNICAL FIELD OF THE INVENTION

The present invention relates to a technical filed of mobile communication, and more particularly, to a method for directly accessing a menu item of a mobile communication terminal.

### BACKGROUND OF THE INVENTION

With technology development, a conventional mobile communication terminal (e.g., a cell phone) is equipped with more and more functions. A user usually performs these functions by accessing a function menu. When functions of the mobile communication terminal become more complicated, the structure and content of the function menu become more complicated as well. The user when operating the mobile communication terminal often needs to get through many levels of menu to locate a desired function item. Moreover, the user not being familiar with the menu structure can have more difficulty locating menu items at a submenu level. Many users do not understand functions of the mobile communication terminal, also never use these functions. This makes many functions of the mobile communication terminal as if non-existent.

In addition, when the user operates the mobile communication terminal and seeks level by level downward from a main menu, it not only wastes time but also increases energy consumption of the mobile communication terminal.

Therefore, there is a need to provide a technical scheme to make the user capable of directly accessing any menu item in a simple and fast way so as to simplify the user operation.

### SUMMARY OF THE INVENTION

The objective of the present invention is to provide a method for directly accessing a menu item of a mobile communication terminal for solving the problem of directly accessing any menu item in the mobile communication terminal.

The present invention is implemented by a method for directly accessing a menu item of a mobile communication terminal, and the method comprises:
a. the mobile communication terminal receiving a menu command inputted by a user via an IDLE interface, and seeking a menu item corresponding to the menu command;
b. the mobile communication terminal activating the menu item.

More specifically, the method further comprises following steps before the step a:
a01. the mobile communication terminal receiving a user command and launching a customizable menu command interface to be displayed;
a02. the mobile communication terminal storing the menu command defined by the user via the customizable menu command interface and a correspondence between the menu command and the menu item.

More specifically, the menu command is a character string, and the character string comprises start character(s), middle character(s), and end character(s).

More specifically, the start characters are **#, and the end character is #.

More specifically, the middle characters are set by the user.

More specifically, the step a comprises:
a1. the mobile communication terminal receiving the character string inputted by the user via the IDLE interface, and seeking the menu item corresponding to the character string.

More specifically, the step b comprises:
b1. the mobile communication terminal directly launching an operation interface corresponding to the menu item or directly performing a function corresponding to the menu item.

More specifically, the mobile communication terminal is a cell phone.

The present invention overcomes disadvantages of conventional skills. The user predefines the menu command corresponding to the menu item. When the user inputs the menu command via the IDLE interface of the mobile communication terminal, the mobile communication terminal directly activates the menu item corresponding to the menu command inputted by the user. The technical scheme provided in the present invention can make the user directly accessing the menu item at any position of the mobile communication terminal. There is no need to access menu items level by level; thereby simplifying an operation by the user, as well as increasing the humanizing degree of the mobile communication terminal.

### BRIEF DESCRIPTION OF THE DRAWINGS

FIG. 1 is a schematic diagram showing a customizable menu command interface in accordance with an embodiment of the present invention.

FIG. 2 is a structural tree diagram showing a menu in accordance with the embodiment of the present invention.

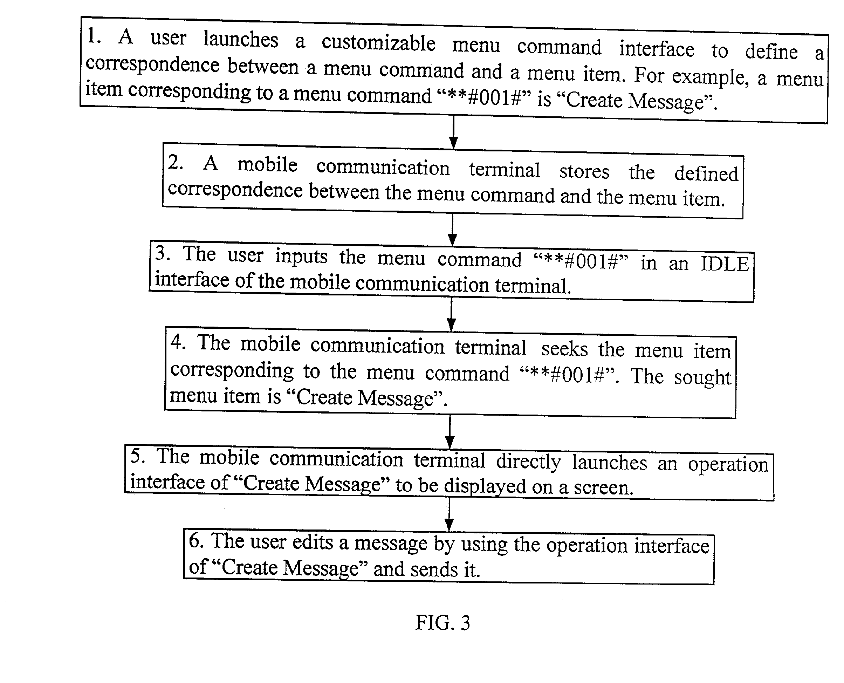

FIG. 3 is a flow chart of the embodiment of the present invention.

### DETAILED DESCRIPTION OF THE INVENTION

To make the objectives, technical schemes, and advantages of the present invention more clear, the present invention will be described in detail as follows in conjunction with drawings and embodiments. It should be understood that the embodiments described herein are merely used for interpreting the present invention, but the present invention is not limited thereto.

An existing mobile communication terminal provides an IDLE interface. A user can input a character string to dial a phone number under the IDLE interface or execute some commands preset by manufacturers. In the embodiment of the present invention, by using the above-mentioned function of the IDLE interface, the user can input a pre-defined character string in the IDLE interface. The pre-defined character string corresponds to a menu item of the mobile communication terminal. When the user inputs the pre-defined character string in the IDLE interface of the mobile communication terminal, the mobile communication terminal will directly activate the menu item according to a correspondence between the pre-defined character string and the menu item. For example, the mobile communication terminal directly launches an operation interface corresponding to the menu item or directly performs a function corresponding to the menu item. The pre-defined character string is called a menu command below.

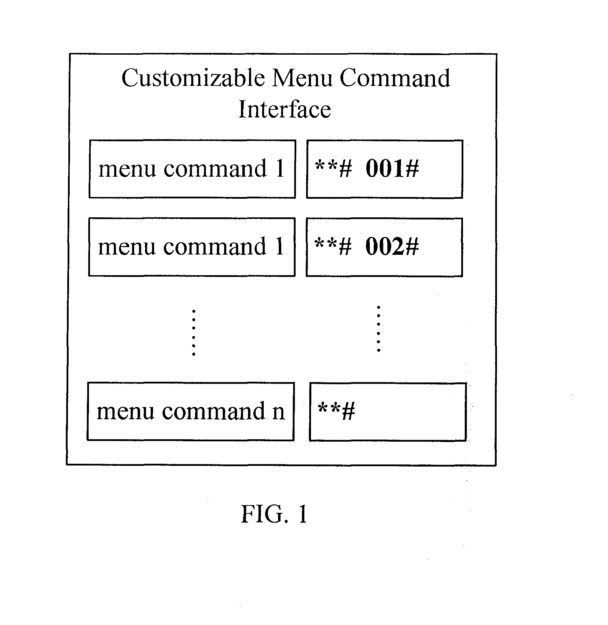

To carry out the technical scheme provided in the present invention, a customizable menu command interface shown in FIG. 1 is provided for the user to customize the menu command in advance. The user can define the correspondence between the menu command and the menu item by using the customizable menu command interface and inputting in the IDLE interface of the mobile communication terminal. In practical applications, the character string which is used to activate the menu item is required to consider the ways to distinguish the phone numbers and the commands already set by the manufactures. Otherwise, a user's input can cause ambiguity. Taking a cell phone commonly used today for example, the phone number begins with numbers (0-9) or a character "#", and all preset commands begin with "*#". To avoid conflicts, the menu command can begin with "**#", and end with "#". The middle can be numbers (0-9) of any digits. According to this rule, a program used in the cell phone can determine whether the content inputted by the user is a menu command or not. For example, the character string "**#06#" is a menu command while the character string "*#06#" is not.

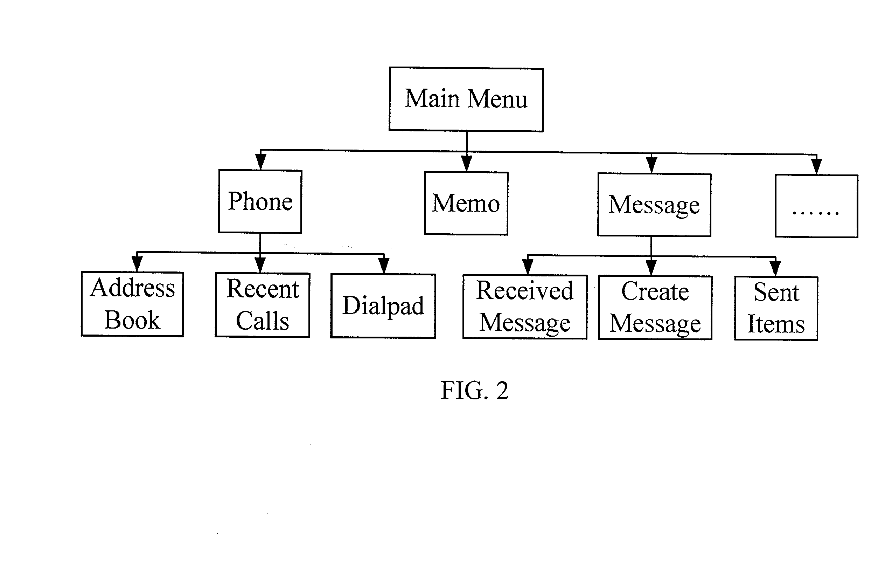

In the customizable character string interface shown in FIG. 1, start characters "**#" of the character string of the menu command is automatically generated. The user inputs a number (e.g., "001") after the start characters "**#" in an input frame, and then inputs an end character "#". After the end character "#" is inputted, the mobile communication terminal will launch a tree menu shown in FIG. 2 to be displayed. For illustration, the first level of the tree menu comprises menu items which includes "Phone", "Message", "Memo", and etc. The lower level of the item "Phone" comprises three menu items including "Address Book", "Recent Calls", and "Dialpad". The lower level of the item "Message" comprises three menu items including "Received Message", "Create Message", and "Sent Items".

The user can control a cursor to move up and down, or sideways, among the tree menu such that the cursor is moved to the menu item that is requested to be defined. For example, the user selects the menu item "Create Message" in the tree menu, and the mobile communication terminal stores "**#001#" and the correspondence between "**#001#" and the menu item "Create message" after confirmation. Likewise, the user defines "**#002#" as the menu command corresponding to the menu item "Recent Calls", and the mobile communication terminal stores "**#002#" and the correspondence between the "**#002#" and the menu item "Recent Calls".

After the user defines the correspondence between the menu commands and commonly-used menu items (or all the menu items) by the above-mentioned approach, the mobile communication terminal stores these menu items and the correspondence between these menu items and the menu commands. The data structure can be a trie tree or other structures adopted for the realities of the situation. When the user needs to directly access certain menu item, for example, the user needs to write a message, the user can input the menu command "**#001#" in the IDLE interface of the mobile communication terminal. The mobile communication terminal seeks the menu item corresponding to the character string "**#001#". The sought menu item corresponding to the menu command is "Create Message". Then, an operation interface used to write a message is directly launched to be displayed on a screen. The user can directly access the operation interface of "Create Message", rather than access it level by level in conventional approaches.

It is noted that in the above-described menu command structure, the middle characters are set according to user demands, except that the start characters "**#"" and the end character "#" are preset according to specific circumstances by the manufacturers of the mobile communication terminal. The manufacturers also can set other character(s) as the start characters and the end character. The middle characters are set, in principle, to be easily memorized and inputted by the user. The middle characters can be a number, and also can be other character(s), such as English letters.

The flow chart of the embodiment of the present invention is shown in FIG. 2, and comprises steps of:

1. A user launches a customizable menu command interface to define a correspondence between a menu command and a menu item. For example, a menu item corresponding to a menu command "**#001#" is "Create Message".

2. A mobile communication terminal stores the defined correspondence between the menu command and the menu item.

3. The user inputs the menu command "**#001#" in an IDLE interface of the mobile communication terminal.

4. The mobile communication terminal seeks a menu item corresponding to the menu command "**#001#". The sought menu item is "Create Message".

5. The mobile communication terminal directly launches an operation interface of "Create Message" to be displayed on a screen.

6. The user edits a message by using the operation interface of "Create Message" and sends it.

The technical scheme provided in the present invention can be applied to a mobile communication terminal represented by a cell phone.

The above descriptions merely illustrate the preferred embodiments of the present invention but the present invention is not limited thereto. All modifications, alterations, and improvements which maintain the spirit and realm of the present invention are within the scope of the present invention.

## Claims

1. A method for directly accessing a menu item of a mobile communication terminal, the method comprising:
a. the mobile communication terminal receiving a menu command inputted by a user via an IDLE interface, and seeking a menu item corresponding to the menu command;
b. the mobile communication terminal activating the menu item.

2. The method according to Claim 1, **characterized in that** the method further comprises following steps before the step a:
a01. the mobile communication terminal receiving a user command and launching a customizable menu command interface to be displayed;
a02. the mobile communication terminal storing the menu command defined by the user via the customizable menu command interface and a correspondence between the menu command and the menu item.

3. The method according to Claim 2, **characterized in that** the menu command is a character string which comprises start character(s), middle character(s), and end character(s).

4. The method according to Claim 3, **characterized in that** the start characters are **#, and the end character is #.

5. The method according to Claim 3, **characterized in that** the middle characters are set by the user.

6. The method according to Claim 3, **characterized in that** the step a comprises:
a1. the mobile communication terminal receiving the character string inputted by the user via the IDLE interface, and seeking the menu item corresponding to the character string.

7. The method according to Claim 1, **characterized in that** the step b comprises:
b1. the mobile communication terminal directly launching an operation interface corresponding to the menu item or directly performs a function corresponding to the menu item.

8. The method according to Claim 1, **characterized in that** the mobile communication terminal is a cell phone.
